# EUROPÄISCHE PATENTSCHRIFT

(11) **EP 1 401 685 B1**
(45) Veröffentlichungstag und Bekanntmachung des Hinweises auf die Patenterteilung: **19.01.2005**
(21) Anmeldenummer: 02771582.0
(22) Anmeldetag: 17.05.2002
(51) Int. Cl.: B60R 21/01

(54) **VERFAHREN ZUR SCHADENSBEGRENZUNG BEI TEILÜBERDECKTER FRONTALKOLLISION UND KRAFTFAHRZEUG MIT EINER DAZU DIENENDEN VORRICHTUNG**
METHOD FOR LIMITING DAMAGES IN THE EVENT OF A PARTIALLY OVERLAPPING FRONTAL COLLISION, AND MOTOR VEHICLE COMPRISING A CORRESPONDING DEVICE
PROCEDE POUR LIMITER LES DOMMAGES DANS LE CAS DE COLLISIONS FRONTALES A RECOUVREMENT PARTIEL ET AUTOMOBILE EQUIPEE D'UN DISPOSITIF CORRESPONDANT

(30) Priorität: 21.05.2001 AT 4182001
(43) Veröffentlichungstag der Anmeldung: 31.03.2004
(73) Patentinhaber: MAGNA STEYR Fahrzeugtechnik AG & Co KG, 8041 Graz (AT)
(72) Erfinder: WINKLER, Stephan, A-8010 Graz (AT)
(74) Vertreter: Kovac, Werner
(86) Internationale Anmeldenummer: PCT/AT2002/000152
(87) Internationale Veröffentlichungsnummer: WO 2002/094618

(56) Entgegenhaltungen:
- WO-A-98/22328
- DE-A- 10 032 711
- DE-A- 19 923 708
- DE-C- 4 400 547
- PATENT ABSTRACTS OF JAPAN vol. 1997, no. 03, 31. März 1997 (1997-03-31) & JP 08 310444 A (HONDA MOTOR CO LTD), 26. November 1996 (1996-11-26)
- PATENT ABSTRACTS OF JAPAN vol. 017, no. 417 (M-1457), 4. August 1993 (1993-08-04) & JP 05 085414 A (MAZDA MOTOR CORP), 6. April 1993 (1993-04-06)

## Beschreibung

Die Erfindung betrifft ein Verfahren zur Schadensbegrenzung bei teilüberdeckter Frontalkollision zweier Kraftfahrzeuge und ein Kraftfahrzeug mit einer dazu dienenden Vorrichtung. Unter einer teilüberdeckten Frontalkollision ist eine Frontalkollision zu verstehen, bei der die Fahrzeuge sich mit im wesentlichen parallelen, aber seitlich gegeneinander versetzten Richtungsvektoren aufeinander zu bewegen. Die Kollisionszone ist somit nur ein seitlicher Teil des Vorderwagens.

Dieser seitliche Teil vor der Fahrgastzelle ist bei Fahrzeugen gewöhnlich weniger steif als der mittlere Teil vor der Fahrgastzelle und nimmt auch weniger Kollisionsenergie auf, sodass die Verformungen der Fahrgastzelle erheblich sind. Es besteht insbesondere die Gefahr, dass das jeweilige Rad in den Passagierraum eindringt. Darüber hinaus tritt bei solchen Kollisionen in der Regel noch ein besonders gefährliches Phänomen auf: Bereits bei relativ kleiner Überdeckung verhaken sich die kollisionsseitigen Vorderräder der beiden Fahrzeuge ineinander; ein Rad zumindest des einen Fahrzeuges kollidiert mit der Radaufhängung des anderen und vice versa. Dadurch wirken nicht nur besonders starke Längskräfte auf die Räder, die sie in den Passagierraum stoßen, sondern die beiden Fahrzeuge werden formschlüssig (zumindest teilweise) miteinander verbunden und so deren Vorbeigleiten aneinander verhindert. Zusätzlich wird den beiden ineinander verhakten Fahrzeugen noch gemeinsam ein Drall um die Hochachse erteilt.

Dieses Phänomen ist in der Literatur unter eben dem Namen "Verhaken" bekannt. Als Gegenmaßnahme ist es aus der DE 195 32 858 A1 bekannt, die vordere Stoßstange im Seitenbereich in Draufsicht stark gerundet und so steif auszubilden, dass diese eine Berührung der kollisionsseitigen Vorderräder verhindert und ein aneinander Abgleiten der beiden Fahrzeuge bewirkt. Man kann sich vorstellen, dass die Stoßstange bei den heute üblichen Kollisionsgeschwindigkeiten dazu nie stark genug sein kann. Außerdem hat die Stoßstange noch andere Sicherheitsanforderungen zu erfüllen, die dem zuwiderlaufen: Eine möglichst breite Kollisionsfläche bei ganz überdeckter Frontalkollision und dosiertem nachgeben bei Kollision mit einem Fußgänger.

Aus der US 5,275,436 ist es weiters bekannt, vor und hinter den Vorderrädern etwa vertikale Ablenkbleche vorzusehen, die in der Horizontalen so ausgerichtet und gekrümmt sind, dass sie das Rad im Kollisionsfall positiv einwärts schwenken. Aber auch diese Ablenkbleche bauen sehr schwer, wenn sie diese Wirkung tatsächlich haben sollen, und erfordern ebenfalls eine besonders starke Stoßstange mit den oben erwähnten Nachteilen.

Der Erfindung liegt die Aufgabe zugrunde, ein einwärts Schwenken der Vorderräder so herbeizuführen, dass dadurch die Erfüllung der anderen Sicherheitsanforderungen nicht beeinträchtigt wird, bei minimalem Bauaufwand und minimaler Gewichtszunahme.

Das erfindungsgemäße Verfahren besteht darin, dass durch ein eine beginnende oder kurz bevorstehende Kollision meldendes Signal die Entladung einer Energiequelle auslöst, die ein derartiges Einschlagen zumindest eines der lenkbaren Vorderräder ausgelöst wird, dass die Radebene des kollisionsseitigen Rades die vertikale Längsmittenebene des Fahrzeuges vor diesem schneidet. Die Energiequelle kann ein Hochdruckspeicher für ein geeignetes Fluid oder eine chemische bzw. pyrotechnische Energiequelle sein. Durch den damit blitzartig erfolgenden "positiven" Lenkeinschlag des kollisionsseitigen. Rades kann sich dieses nicht im Kollisionsgegner, beziehungsweise insbesondere in dessen kollisionsseitigem Rad verhaken; die Außenseite der Felge des Rades wirkt vielmehr als Schutzschild, an dem das Gegenfahrzeug beziehungsweise dessen kollisionsseitiges Rad abgleitet.

Bei einer kollisionsbedingten Rückverschiebung des Stoßrades bildet dabei die positiv eingeschlagene Radfelge mit den umgebenden stoßseitigen Fahrzeugstrukturen (Radaufhängung, Längsträger, Schweller) einen kompakten Verbund. Die durch den positiven Lenkeinschlag abgleitgünstigen Bedingungen in Form eines konstant "schlanken" Abgleitkegels bleiben somit während der ganzen Kollision gewahrt.

Die erfindungsgemäße Gegenmaßnahme kann zeitlich vorhalten und erfolgt sehr schnell mit relativ geringen Kräften, da die Lenkvorrichtung und die Achsgeometrie ja schon für den normalen Betrieb so ausgelegt ist, dass sie mit möglichst wenig Kraft auskommt und präzise arbeitet.

In Weiterbildung des Verfahrens können die beiden Vorderräder gegensinnig eingeschlagen werden (Anspruch 2). Dadurch erübrigt sich eine Unterscheidung nach der Fahrzeugseite, an der die Kollision erfolgt.

Wenn auch bei Rechtsverkehr eine Kollision mit Überdeckung auf der linken Seite die wahrscheinlichere ist, so kann es am rechten Straßenrand noch Alleebäume geben. Sogar bei solchen Kollisionsgegnern zeigt das erfindungsgemäße Verfahren den gewünschten Effekt. Darüber hinaus wirkt das an der Kollision nicht beteiligte gegensinnig eingeschlagene Rad dem beim Abgleiten erteilten Drall um die Hochachse entgegen.

Das die beginnende oder kurz bevorstehende Kollision meldende Signal kann von einem vor dem Rad angeordneten Verzögerungssensor (Anspruch 3) oder von einem Annäherungsdetekor (Anspruch 4) abgegeben werden. Bei ausreichendem Überhang des Fahrzeuges nach vorne ist die erstere Anordnung einfach und ausreichend. Dabei kann jedem Rad ein Verzögerungssensor vorgelagert, oder ein gemeinsamer vorgesehen sein. Die zweitere ist vor allem dann vorteilhaft, wenn ein Annäherungsdetektor für andere Sicherheitsfunktionen sowieso vorgesehen ist.

Ein erfindungsgemäßes Kraftfahrzeug mit lenkbaren Vorderrädern und einer Lenkvorrichtung zeichnet sich dadurch aus, dass in der Lenkvorrichtung ein Verbindungselement mit Mitteln zum schnellen Aufbau eines Druckes vorgesehen ist, wodurch das Verbindungselement im Kollisionsfall derartig auf die Lenkvorrichtung einwirkt, dass zumindest das kollisionsseitige Vorderrad im positiven Sinn eingeschlagen wird (Anspruch 5). Vorzugsweise sind die Mittel zum schnellen Aufbau eines Druckes durch einen Steuerbefehl gezündete Sprengladungen (Anspruch 6).

Der Eingriff in die Lenkvorrichtung kann je nach deren Art vorgenommen werden. Bei einem Kraftfahrzeug mit einer in der Regel unterbrochenen Spurstange, sind die Verbindungselemente zwischen einem zu dem einen Vorderrad und einem zu dem anderen Vorderrad führenden Teil der Spurstange angebracht (Anspruch 7). Wenn die Spurstange hinter der Vorderachse angeordnet ist, vergrößern die Verbindungselemente den Abstand zwischen dem zu dem einen Vorderrad und dem zu dem anderen Vorderrad führenden Teil der Spurstange im Kollisionsfall (Anspruch 8). Wenn die Spurstange vor der Vorderachse angeordnet ist, verkleinern sie den Abstand (Anspruch 9).

Bei einem Kraftfahrzeug mit Zahnstangenlenkung sind die Verbindungselemente zwischen der Zahnstange und einem zu einem Vorderrad führenden Teil der Spurstange angebracht (Anspruch 10). Gegebenenfalls ist für jedes Rad ein eigenes Verbindungselement vorgesehen.

Im folgenden wird die Erfindung anhand von Abbildungen beschrieben und erläutert. Es stellen dar:
- Fig. 1:: ein erfindungsgemäßes Fahrzeug,
- Fig. 2:: dasselbe in einer ersten Phase, vor einer Kollision,
- Fig. 3:: dasselbe in einer zweiten Phase, bei beginnender Kollision,
- Fig. 4:: dasselbe in einer dritten Phase, während der Kollision,
- Fig. 5:: dasselbe in einer vierten Phase, nach der Kollision.

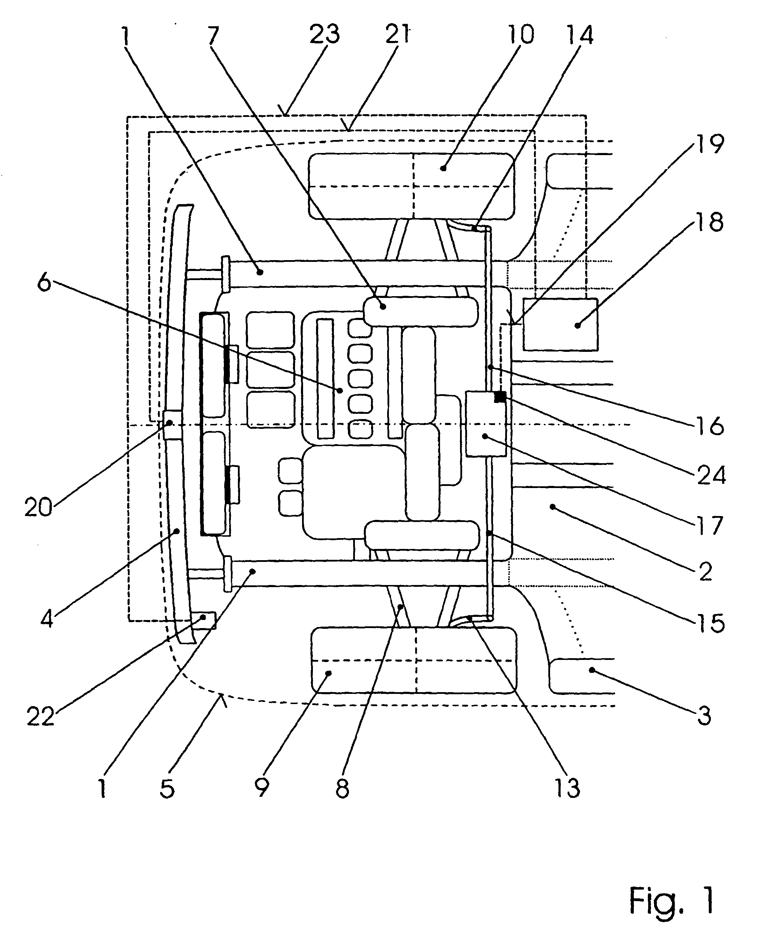

**Fig. 1** zeigt schematisch die Frontpartie eines für das erfindungsgemäße Verfahren ausgestatteten Kraftfahrzeuges. Sie besteht aus Rahmenlängsträgem 1, die an einer Bodenplatte 2 anschließen, welche ihrerseits durch Schweller 3 seitlich begrenzt ist. Das vordere Ende des Kraftfahrzeuges wird von einem Stoßfänger 4 gebildet, der dem vorderen Teil der Fahrzeugkontur 5 (strichliert) folgt. Ein Motorgetriebeblock 6 ist nur angedeutet. An Aufhängungslagern 7, die an den Rahmenlängsträgern befestigt oder Teil eines Fahrschemels sind, sind beispielsweise Querlenker 8 geführt. In dieser Weise ist ein linkes Vorderrad 9 und ein rechtes Vorderrad 10 aufgehängt.

Die beiden Vorderräder 9, 10 sind in der üblichen Weise mittels Lenkhebeln 13, 14 schwenkbar, an denen eine linke Spurstange 15 und eine rechte Spurstange 16 angreift. Zwischen diesen Spurstangenteilen 15, 16 ist ein erfindungsgemäßes Verbindungselement 17 vorgesehen, das von einem Steuergerät 18 aus über eine Befehlsleitung 19 angesteuert wird. Die Ansteuerung besteht in einem Impuls, der beispielsweise eine in dem Verbindungselement 17 vorgesehene Sprengladung 24 zur Detonation bringt.

Alternativ ist an deren Stelle an einen Hochdruckspeicher gedacht. In dem gezeigten Ausführungsbeispiel ist das Lenkgetriebe selbst überhaupt nicht dargestellt. Es wirkt entweder auf die beiden Spurstangenteile 15, 16 oder auf einen Lenkhebel. Im ersteren Fall handelt es sich häufig um eine Zahnstangenlenkung. Je nach Bauart einer solchen könnten zwischen deren Lenkgetriebe und den Spurstangenteilen 15, 16 auch auf jeder Seite erfindungsgemäße Verbindungselemente vorgesehen sein.

Für die Meldung der bevorstehenden oder beginnenden Kollision gibt es verschiedene Möglichkeiten, wovon in Fig. 1 zwei Alternativen angedeutet sind. Entweder ist im Stoßfänger 4 ein Annäherungssensor 20 vorgesehen, der über die Signalleitung 21 mit dem Steuergerät 18 verbunden ist, in dem dann auch eine Auswertung und Diskriminierung der vom Annäherungssensor 20 gelieferten Signale stattfindet. Alternativ sind an geeigneten Stellen, das heißt möglichst weit vor den Rädern 9, 10, Verzögerungssensoren 22 vorgesehen, die über Signalleitungen 23 mit dem Steuergerät 18 verbunden sind.

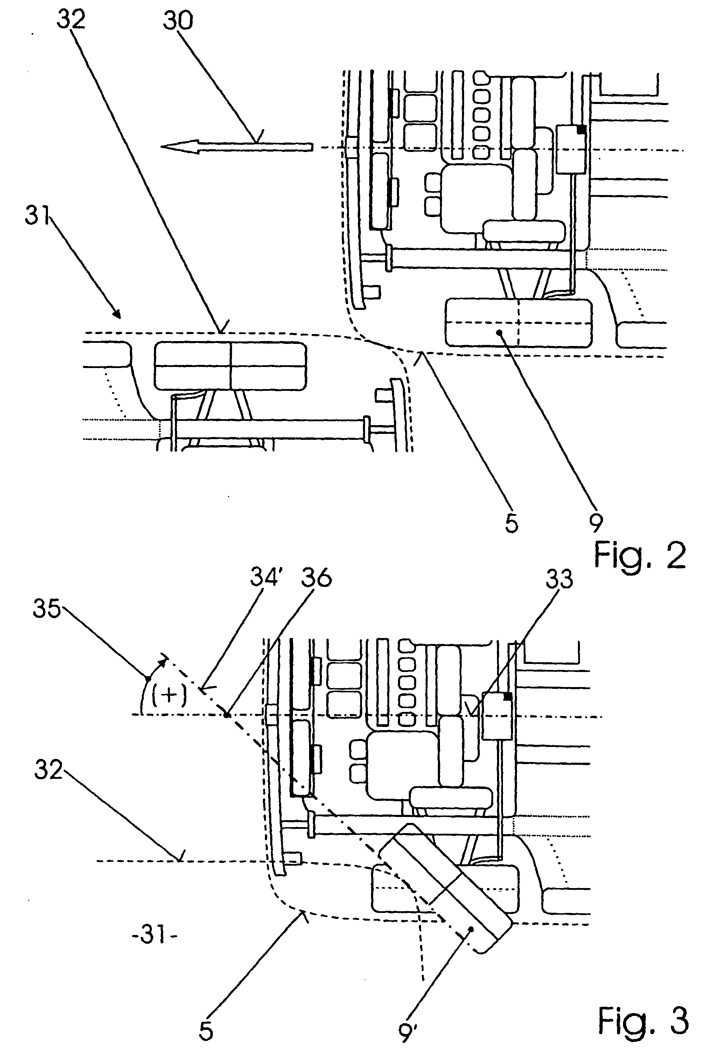

**Fig. 2** zeigt das erfindungsgemäß ausgestattete Kraftfahrzeug 30, das sich in Richtung und Geschwindigkeit gemäß dem Pfeil 30 fortbewegt, unmittelbar vor einer teilüberdeckten Frontalkollision mit einem Kollisionsgegner 31, dessen Kontur 32 ebenfalls strichliert angedeutet ist. Der Kollisionsgegner 31 braucht nicht erfindungsgemäß ausgestattet zu sein; umso besser ist es für ihn, wenn er es auch ist. Zu diesem Zeitpunkt hat der Annäherungssensor 20 (Fig. 1) die bevorstehende Kollision bereits gemeldet beziehungsweise spricht ein Verzögerungssensor 22 (Fig. 1) gerade an. Die Sprengladung 24 (Fig. 1) wird gezündet und die beiden Vorderräder 9, 10, von denen jetzt nur mehr das kollisionsseitige Vorderrad 9 zu sehen ist, werden eingeschlagen.

Wie in **Fig. 3** zu sehen, nimmt das Rad 9 so die Stellung 9' ein, in der dessen Radebene durch ihre Spur 34' auf der Bildfläche dargestellt ist. Diese schneidet im Punkt 36 die vertikale Längsmittenebene 33 des Fahrzeuges. Dieser Schnittpunkt, eigentlich die Projektion der Schnittlinie, liegt vor dem Fahrzeug, was als positiver Einschlag bezeichnet wird. Die Kontur 32 des Kollisionsgegners 31 ist bereits in die Kontur 5 unseres Fahrzeuges eingedrungen und berührt die Radebene 34', tatsächlich berührt sie die nicht eigens dargestellte Felge dieses Rades. Durch die Neigung der Radebene 34' bildet die Felge einen Schild, der einerseits unser Fahrzeug von dem Kollisionsgegner 31 wegdrückt und andererseits eine nach rechts-rückwärts auf das Rad 9' wirkende Kraft erfährt.

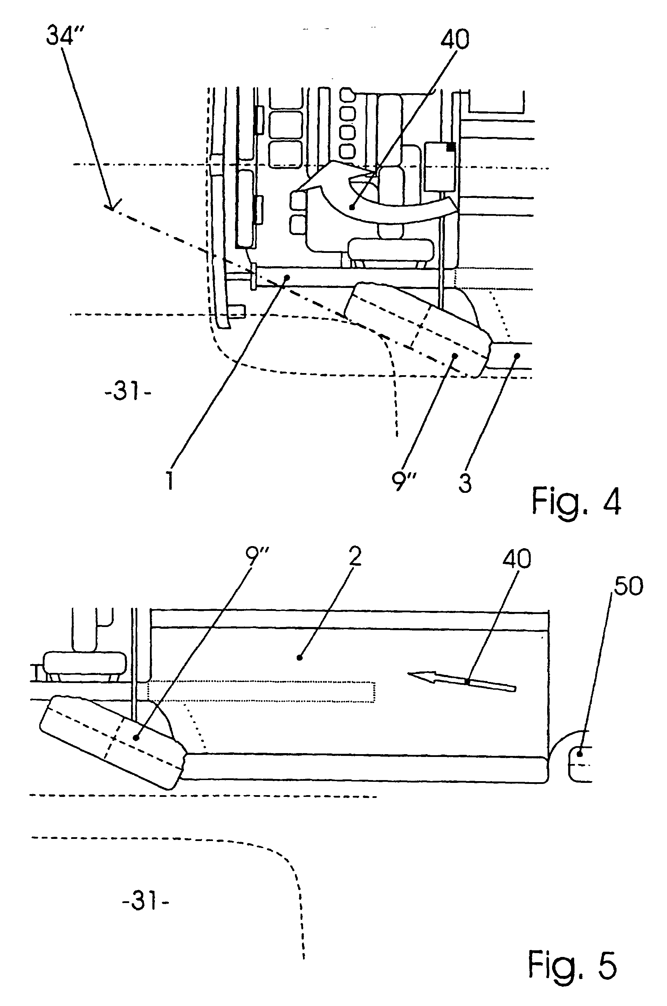

In **Fig. 4** ist zu erkennen, dass diese nach rechts-rückwärts wirkende Kraft unser kollisionsseitiges Vorderrad unter Zerstörung der Radaufhängung so verschiebt, dass es am Schweller 3 und am Rahmenlängsträger 1 anliegt. In dieser Position 9' kann das Rad noch größere Kräfte aufnehmen, ohne selbst in das Innere des Fahrzeuges einzudringen, und lenkt unser Fahrzeug, ohne es gefährlich stark zu verzögern, in Richtung des Pfeiles 40 ab. Diese seitliche Ablenkung des Fahrzeuges kann durch gegensinnigen Einschlag des rechten Voderrades 10 gemildert werden. Messungen und Simulationsrechnungen haben ergeben, dass auf diese Weise Kollisionen, die bei Verhaken der Vorderräder für die Insassen unseres Fahrzeuges letal sein könnten, mit nur relativ geringen Verzögerungskräften davonkommen. Aber auch für die Insassen des Kollisionsgegners 31 sind die Folgen wesentlich gemildert.

**Fig. 5** zeigt unser Fahrzeug noch nach der Kollision, es setzt seine Bewegung entsprechend dem Richtungspfeil 40 fort. Zur Orientierung ist noch das linke Hinterrad 50 angedeutet.

## Patentansprüche

1. Verfahren zur Schadensbegrenzung bei teilüberdeckter Frontalkollision zweier Kraftfahrzeuge **dadurch gekennzeichnet, dass** ein eine beginnende oder kurz bevorstehende Kollision meldendes Signal die Entladung einer Energiequelle auslöst, die ein derartiges Einschlagen zumindest eines der lenkbaren Vorderräder (9,10) auslöst, dass die Radebene (34) des kollisionsseitigen Rades (9) die vertikale Längsmittenebene (33) des Fahrzeuges in einem Punkt (36) vor diesem schneidet.

2. Verfahren nach Anspruch 1, **dadurch gekennzeichnet, dass** beide Vorderräder (9,10) gegensinnig eingeschlagen werden.

3. Verfahren nach Anspruch 1, **dadurch gekennzeichnet, dass** das Signal von einem vor dem Rad (9,10) angeordneten Verzögerungssensor (22) abgegeben wird.

4. Verfahren nach Anspruch 1., **dadurch gekennzeichnet, dass** das Signal von einem Annäherungsdetektor (20) abgegeben wird.

5. Kraftfahrzeug mit einer Vorrichtung zur Schadensbegrenzung bei teilüberdeckter Frontalkollision, wobei das Kraftfahrzeug lenkbare Vorderräder (9,10) und eine Lenkvorrichtung (13,14,15,16) besitzt, **dadurch gekennzeichnet, dass** in der Lenkvorrichtung (13,14,15,16) ein Verbindungselement (17) mit Mitteln (24) zum schnellen Aufbau eines Druckes vorgesehen ist, wodurch das Verbindungselement (17) im Kollisionsfall derartig auf die Lenkvorrichtung (13,14,15,16) einwirkt, dass zumindest das kollisionsseitige Vorderrad (9) im positiven Sinn (35) eingeschlagen wird.

6. Kraftfahrzeug nach Anspruch 5, **dadurch gekennzeichnet, dass** das Mittel (24) zum schnellen Aufbau eines Druckes eine durch einen von einem Steuergerät (18) gegebenen Steuerbefehl gezündete Sprengladung ist.

7. Kraftfahrzeug nach Anspruch 5 mit einer Spurstange, **dadurch gekennzeichnet, dass** das Verbindungselement (17) zwischen einem zu dem einen Vorderrad (9) und einem zu dem anderen Vorderrad (10) führenden Teil (15,16) der Spurstange angebracht sind.

8. Kraftfahrzeug nach Anspruch 7 mit einer hinter der Vorderachse angeordneten Spurstange (15,16), **dadurch gekennzeichnet, dass** das Verbindungselement (17) den Abstand zwischen dem zu dem einen Vorderrad (9) und dem zu dem anderen Vorderrad (9) führenden Teil der Spurstange (15,16) im Kollisionsfall vergrößert.

9. Kraftfahrzeug nach Anspruch 7 mit einer vor der Vorderachse angeordneten Spurstange, **dadurch gekennzeichnet, dass** das Verbindungselement (17) den Abstand zwischen dem zu dem einen Vorderrad und dem zu dem anderen Vorderrad führenden Teil der Spurstange im Kollisionsfall verkleinert.

10. Kraftfahrzeug nach Anspruch 7 mit einer Zahnstange, **dadurch gekennzeichnet, dass** das Verbindungselement zwischen der Zahnstange und einem zu einem Vorderrad führenden Teil der Spurstange angebracht ist.

## Claims

1. A method for damage limitation in a partially overlapping frontal collision of two motor vehicles, **characterized in that** a signal indicating the start of a collision or an imminent collision triggers the discharging of an energy source which causes at least one of the steerable front wheels (9, 10) to be turned in such a manner that the wheel plane (34) of the collision-side wheel (9) intersects the vertical longitudinal central plane (33) of the vehicle at a point (36) in front of said vehicle.

2. The method as claimed in Claim 1, **characterized in that** the two front wheels (9, 10) are turned in an opposite direction.

3. The method as claimed in Claim 1, **characterized in that** the signal is output by a deceleration sensor (22) arranged in front of the wheel (9, 10).

4. The method as claimed in Claim 1, **characterized in that** the signal is output by a proximity detector (20).

5. A motor vehicle having a device for damage limitation in a partially overlapping frontal collision, the motor vehicle having steerable front wheels (9, 10) and a steering device (13, 14, 15, 16), **characterized in that** a connecting element (17) having means (24) for the rapid build up of a pressure is provided in the steering device (13, 14, 15, 16), which means that, in the event of a collision, the connecting element (17) acts on the steering device (13, 14, 15, 16) in such a manner that at least the collision-side front wheel (9) is turned in the positive direction (35).

6. The motor vehicle as claimed in Claim 5, **characterized in that** the means (24) for the rapid build up of a pressure is an explosive charge which is ignited by a control command given by a control unit (18).

7. The motor vehicle as claimed in Claim 5, having a steering tie rod, **characterized in that** the connecting element (17) are fitted between a part (15) of the steering tie rod leading to the one front wheel (9) and a part (16) of the steering tie rod leading to the other front wheel (10).

8. The motor vehicle as claimed in Claim 7, having a steering tie rod (15, 16) arranged behind the front axle, **characterized in that**, in the event of a collision, the connecting element (17) increases the distance between that part of the steering tie rod (15) which leads to the one front wheel (9) and that part of the steering tie rod (16) which leads to the other front wheel (9).

9. The motor vehicle as claimed in Claim 7, having a steering tie rod arranged in front of the front axle, **characterized in that**, in the event of a collision, the connecting element (17) reduces the distance between that part of the steering tie rod which leads to the one front wheel and that part of the steering tie rod which leads to the other front wheel.

10. The motor vehicle as claimed in Claim 7, having a steering rack, **characterized in that** the connecting element is fitted between the steering rack and a part of the steering tie rod leading to a front wheel.

## Revendications

1. Procédé de limitations de dommages lors d'une collision frontale avec recouvrement partiel de deux véhicules automobiles, **caractérisé en ce qu'**un signal d'avertissement d'un début de collision ou d'une collision imminente déclenche la décharge d'une source d'énergie qui déclenche un braquage d'au moins une des roues avant orientables (9, 10) de sorte que le plan (34) de la roue (9) se trouvant du côté de la collision coupe le plan médian longitudinal (33) du véhicule en un point (36) situé en avant de celui-ci.

2. Procédé selon la revendication 1, **caractérisé en ce que** les deux roues avant (9, 10) sont braquées en sens contraire.

3. Procédé selon la revendication 1, **caractérisé en ce que** le signal est délivré par un capteur de décélération (22) disposé en avant de la roue (9, 10).

4. Procédé selon la revendication 1, **caractérisé en ce que** le signal est délivré par un détecteur de proximité (20).

5. Véhicule automobile comportant un dispositif de limitation de dommages lors d'une collision frontale avec recouvrement partiel, le véhicule automobile possédant des roues avant orientables (9, 10) et un dispositif de direction (13, 14, 15, 16), **caractérisé en ce qu'**un élément de liaison (17) à des moyens (24) d'établissement rapide d'une pression est prévu dans le dispositif de direction (13, 14, 15, 16) de façon que l'élément de liaison (17) agisse en cas de collision sur le dispositif de direction (13, 14, 15, 16) de telle sorte qu'au moins la roue avant (9) du côté de la collision soit braquée dans un sens positif (35).

6. Véhicule automobile selon la revendication 5, **caractérisé en ce que** le moyen (24) d'établissement rapide d'une pression est une charge explosive amorcée par un ordre délivré par un appareil de commande (18).

7. Véhicule automobile selon la revendication 5, comprenant une barre d'accouplement, **caractérisé en ce que** l'élément de liaison (17) est monté entre une partie (15) de la barre d'accouplement menant à la roue avant (9) et une partie (16) de la barre d'accouplement menant à l'autre roue avant (10).

8. Véhicule automobile selon la revendication 7, comprenant une barre d'accouplement (15, 16) placée en arrière de la roue avant, **caractérisé en ce que** l'élément de liaison (17) augmente, en cas de collision, la distance entre la partie (15) de la barre d'accouplement menant à la roue avant (9) et la partie (16) de la barre d'accouplement menant à l'autre roue avant (10).

9. Véhicule automobile selon la revendication 7, comprenant une barre d'accouplement placée en avant de la roue avant, **caractérisé en ce que** l'élément de liaison (17) réduit, en cas de collision, la distance entre la partie de la barre d'accouplement menant à la roue avant et la partie de la barre d'accouplement menant à l'autre roue avant.

10. Véhicule automobile selon la revendication 7, comportant une crémaillère, **caractérisé en ce que** l'élément de liaison est monté entre la crémaillère et une pièce, menant à une roue avant, de la barre d'accouplement.
